# EUROPÄISCHE PATENTSCHRIFT

(11) **EP 4 337 872 B1**
(45) Veröffentlichungstag und Bekanntmachung des Hinweises auf die Patenterteilung: **21.01.2026**
(21) Anmeldenummer: 22727239.0
(22) Anmeldetag: 12.05.2022
(51) Int. Cl.: F16C 17/10, F16C 23/04, F16C 25/02, F03D 80/70

(54) **GONDEL FÜR EINE WINDKRAFTANLAGE**
NACELLE FOR A WIND TURBINE
NACELLE POUR ÉOLIENNE

(30) Priorität: 14.05.2021 AT 503742021
(43) Veröffentlichungstag der Anmeldung: 20.03.2024
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2022/060167
(87) Internationale Veröffentlichungsnummer: WO 2022/236356

(56) Entgegenhaltungen:
- EP-A1- 3 783 237
- WO-A1-2018/071941
- WO-A1-2018/095452
- WO-A1-2020/232495
- WO-A2-2015/091407
- US-A- 3 709 573

## Beschreibung

Die Erfindung betrifft eine Gondel für eine Windkraftanlage.

Die EP3783237A1 offenbart eine Windkraftanlage mit einer Gondel mit einem Gondelgehäuse, einer Rotorwelle, einer Rotornabe und einer ersten und zweiten Wälzlagerung zur Lagerung der Rotorwelle am Gondelgehäuse.

Die aus der EP3783237A1 bekannte Windkraftanlage weist den Nachteil auf, dass die Lagerung der Rotorwelle nur unzureichend die hohen Anforderungen in Windkraftanlagen erfüllt. Weitere Lagerungen für Rotorwellen von Windkraftanalgen sind aus der WO 2020/232495 A1, die die Merkmale des Oberbegriffs von Anspruch 1 offenbart, der EP 3 783 237 A1, der WO 2018/071941 A1, der WO 2018/095452 A1 und der WO 2015/091407 A2 bekannt. Die US 3 709 573 A offenbart eine weitere Lagerung. Aufgabe der vorliegenden Erfindung war es, die Nachteile des Standes der Technik zu überwinden und eine Gondel für eine Windkraftanlage zur Verfügung zu stellen, welche eine verbesserte Lagerung aufweist.

Diese Aufgabe wird durch eine Vorrichtung und ein Verfahren gemäß den Ansprüchen gelöst. Erfindungsgemäß ist eine Gondel für eine Windkraftanlage ausgebildet. Die Gondel umfasst:
- ein Gondelgehäuse;
- eine Rotorwelle;
- eine Rotornabe, welche an der Rotorwelle angeordnet ist;
- eine erste Rotorwellenlagerung zur Lagerung der Rotorwelle am Gondelgehäuse,
- eine zweite Rotorwellenlagerung zur Lagerung der Rotorwelle am Gondelgehäuse,
wobei die erste Rotorwellenlagerung und die zweite Rotorwellenlagerung in einem Axialabstand zueinander angeordnet sind und wobei die erste Rotorwellenlagerung näher an der Rotornabe angeordnet ist, als die zweite Rotorwellenlagerung.

Die erste Rotorwellenlagerung weist eine erste Gleitfläche auf, welche einen gemittelten ersten Gleitflächendurchmesser aufweist. Die zweite Rotorwellenlagerung weist eine zweite Gleitfläche auf, welche einen gemittelten zweiten Gleitflächendurchmesser aufweist, wobei die erste Gleitfläche zumindest abschnittsweise von der Rotornabe abgewandt ist, wobei die erste Gleitfläche und die zweite Gleitfläche zumindest in einem Teilabschnitt einander zugewandt sind.

Insbesondere kann vorgesehen sein, dass die erste Rotorwellenlagerung und die zweite Rotorwellenlagerung als eigenständige Gleitlagerungen ausgebildet sind.

Die erfindungsgemäße Gondel bringt den Vorteil mit sich, dass die erste Rotorwellenlagerung und die zweite Rotorwellenlagerung als Gleitlagerung ausgebildet sind. Durch die erfindungsgemäße Anordnung der ersten Gleitfläche und der zweiten Gleitfläche zueinander bzw. zur Rotornabe kann eine durch die Windkraft auftretende Axialbelastung bzw. ein durch das Gewicht der Rotornabe auftretendes Kippmoment besonders effizient aufgenommen bzw. übertragen werden. Somit kann durch die erfindungsgemäße Anordnung eine überraschend gute Eignung für den Einsatz in einer Gondel einer Windkraftanlage erreicht werden. Dass die erste Gleitfläche zumeist abschnittsweise von der Rotornabe abgewandt ist, bedeutet, dass zumindest einem bestimmten Punkt eine an die Gleitfläche angelegte Tangente von der Rotornabe weg verkippt ist.

Weiters kann es zweckmäßig sein, wenn die erste Gleitfläche einen gemittelten ersten Gleitflächendurchmesser aufweist und dass der Axialabstand zwischen der ersten Rotorwellenlagerung und der zweiten Rotorwellenlagerung vom innersten Kontaktpunkt der ersten Gleitfläche zum innersten Kontaktpunkt der zweiten Gleitfläche gemessen ist, wobei der Axialabstand zwischen 20% und 1.000%, insbesondere zwischen 50% und 500%, bevorzugt zwischen 90% und 300%, im Speziellen zwischen 120% und 200% des gemittelten ersten Gleitflächendurchmessers beträgt. Der gemittelte erste Gleitflächendurchmesser ist jener Durchmesser, welcher im Mittel des Flächenintegrals über die erste Gleitfläche anliegt. Der innerste Kontaktpunkt der ersten Gleitfläche und der innerste Kontaktpunkt der zweiten Gleitfläche sind jene Punkte, an welchen die jeweilige Gleitfläche noch die jeweilige Gegenfläche kontaktieren und welche nächstliegend zueinander angeordnet sind.

Ferner kann vorgesehen sein, dass die erste Gleitfläche konisch ausgebildet ist und dass die zweite Gleitfläche konisch ausgebildet ist, wobei die erste Gleitfläche und die zweite Gleitfläche V-Förmig zueinander angeordnet sind. Dies bringt den Vorteil mit sich, dass derart ausgebildete Gleitflächen einfach herzustellen sind.

In einer alternativen Ausführungsvariante kann vorgesehen sein, dass die erste Gleitfläche in Form einer ersten Kugelkalotte ausgebildet ist und dass die zweite Gleitfläche in Form einer zweiten Kugelkalotte ausgebildet ist, wobei die erste Gleitfläche im Längsschnitt einen ersten Kugelkalottenbogen bildet und wobei die zweite Gleitfläche im Längsschnitt einen zweiten Kugelkalottenbogen bildet, wobei eine erste Tangente in einer ersten Kugelkalottenbogenmitte und eine zweite Tangente in einer zweiten Kugelkalottenbogenmitte V-Förmig zueinander angeordnet sind. Besonders eine derartige Ausbildung der ersten Gleitfläche und der zweiten Gleitfläche bringt eine gute Übertragbarkeit von Axialkräften bei gleichzeitiger Aufnahme der durch die Rotornabe aufgebrachten Radialkräfte und Koppmomente mit sich.

Vorteilhaft ist auch eine Ausprägung, gemäß welcher vorgesehen sein kann, dass die erste Rotorwellenlagerung einen ersten Außenring aufweist und dass die zweite Rotorwellenlagerung einen zweiten Außenring aufweist, und dass die erste Rotorwellenlagerung einen ersten Innenring aufweist und dass die zweite Rotorwellenlagerung einen zweiten Innenring aufweist, wobei die erste Gleitfläche zwischen dem ersten Außenring und dem ersten Innenring angeordnet ist und wobei die zweite Gleitfläche zwischen dem zweiten Außenring und dem zweiten Innenring angeordnet ist, wobei der erste Außenring und der zweite Außenring in deren Position fix zueinander angeordnet sind und wobei der erste Innenring in dessen Position fix zur Rotorwelle angeordnet ist und wobei der zweite Innenring oder ein zweites Gleitlagerelement mittels eines Spannmittels in Axialrichtung zum ersten Innenring hin vorgespannt ist, wobei das Spannmittel zwischen dem zweiten Innenring und der Rotorwelle wirkt. Besonders eine derartige Ausbildung der ersten Gleitfläche und der zweiten Gleitfläche bringt eine gute Übertragbarkeit von Axialkräften bei gleichzeitiger Aufnahme der durch die Rotornabe aufgebrachten Radialkräfte und Kippmomente mit sich.

In einer alternativen Ausführungsvariante ist es auch denkbar, dass die beiden Innenringe in deren axialen Position in einem fixen Abstand zueinander angeordnet sind. Zur axialen Vorspannung können die beiden Außenringe bzw. die beiden Lagerböcke relativ zueinander verschiebbar sein. Insbesondere ist es denkbar, dass der erste Lagerbock fixiert ist und zum Vorspannen der Lagerung der zweite Lagerbock vom ersten Lagerbock weg verschoben bzw. gespannt wird.

Gemäß einer Weiterbildung ist es möglich, dass das Spannmittel in Form einer Wellenmutter ausgebildet ist. Dies bringt den Vorteil mit sich, dass mittels einer Wellenmutter die beiden Innenringe exakt zueinander positioniert werden können, um eine notwendige Vorspannung der Gleitlagerung zu erreichen. Weiters ist es denkbar, dass die Wellenmutter mit einem vordefinierten Anzugsdrehmoment angezogen wird, um eine definierte Vorspannung zu erreichen.

Weiters ist es denkbar, dass zwischen dem Spannmittel und dem zweiten Innenring bzw. zwischen dem Spannmittel und den zweiten Gleitlagerpads ein Federelement angeordnet ist. Dies bringt den Vorteil mit sich, dass durch das Federelement etwaige Wärmedehnungen bzw. in geringem Maße auch Verschleiß ausgeglichen werden kann.

Ferner kann es zweckmäßig sein, wenn ein Getriebe ausgebildet ist, welches mit der Rotorwelle drehmomentgekoppelt ist, wobei das Gewicht des Getriebes zumindest teilweise von der zweiten Rotorwellenlagerung aufgenommen ist. Dies bringt den Vorteil mit sich, dass zur Lagerung des Getriebes keine eigene Lagerung benötigt wird.

Weiters kann vorgesehen sein, dass die erste Rotorwellenlagerung und/oder die zweite Rotorwellenlagerung zur zusätzlichen Aufnahme des Gewichtes des Generators ausgebildet sind. Dies bringt den Vorteil mit sich, dass zur Lagerung des Generators keine eigene Lagerung benötigt wird.

Darüber hinaus kann vorgesehen sein, dass die erste Gleitfläche und/oder die zweite Gleitfläche an Gleitlagerpads ausgebildet sind. Dies bringt den Vorteil mit sich, dass Gleitlagerpads einfach in die Gleitlagerung einzusetzen sind und einfach zu wechseln sind. Darüber hinaus weisen Gleitlagerpads eine exakte Gleitfläche auf und sind in einem industriellen Prozess einfach herzustellen.

Weiters kann vorgesehen sein, dass der gemittelte erste Gleitflächendurchmesser größer ist, als der gemittelte zweite Gleitflächendurchmesser, insbesondere dass der gemittelte zweite Gleitflächendurchmesser zwischen 50% und 90%, bevorzugt zwischen 70% und 80% des gemittelten ersten Gleitflächendurchmessers beträgt. Dies bringt den Vorteil mit sich, dass die erste Rotorwellenlagerung, an welcher im Vergleich zur zweiten Rotorwellenlagerung eine erhöhte Axialkraft und eine erhöhte Radialkraft auftritt, entsprechend dieser ungleichmäßigen Kraftverteilung größer dimensioniert ist, wodurch eine optimale Kraftaufnahme erreicht werden kann.

Gemäß einer besonderen Ausprägung ist es möglich, dass der erste Außenring in einem ersten Lagerbock aufgenommen ist und der zweite Außenring in einem zweiten Lagerbock aufgenommen sind. Hierdurch kann erreicht werden, dass die erste Rotorwellenlagerung und die zweite Rotorwellenlagerung eigenständig und unabhängig voneinander ausgebildet sein können.

Weiters kann vorgesehen sein, dass der zweite Lagerbock in einem Getriebe integriert ausgebildet ist.

Weiters ist es denkbar, dass die erste Rotorwellenlagerung und die zweite Rotorwellenlagerung als hydrodynamisches Gleitlager ausgebildet sind. Alternativ dazu ist es auch denkbar, dass die erste Rotorwellenlagerung und die zweite Rotorwellenlagerung als hydrostatische Gleitlagerung ausgebildet sind. Zur Versorgung der ersten Rotorwellenlagerung und der zweiten Rotorwellenlagerung mit Schmieröl kann jeweils eine eigenständige Schmierölpumpe vorgesehen sein. In einer alternativen Ausführungsvariante ist es auch denkbar, dass die erste Rotorwellenlagerung und die zweite Rotorwellenlagerung mittels einer gemeinsamen Schmierölpumpe mit Schmieröl versorgt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Längsschnitt eines ersten Ausführungsbeispiels der Gleitlagerung;
- Fig. 3: ein Längsschnitt eines zweiten Ausführungsbeispiels der Gleitlagerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

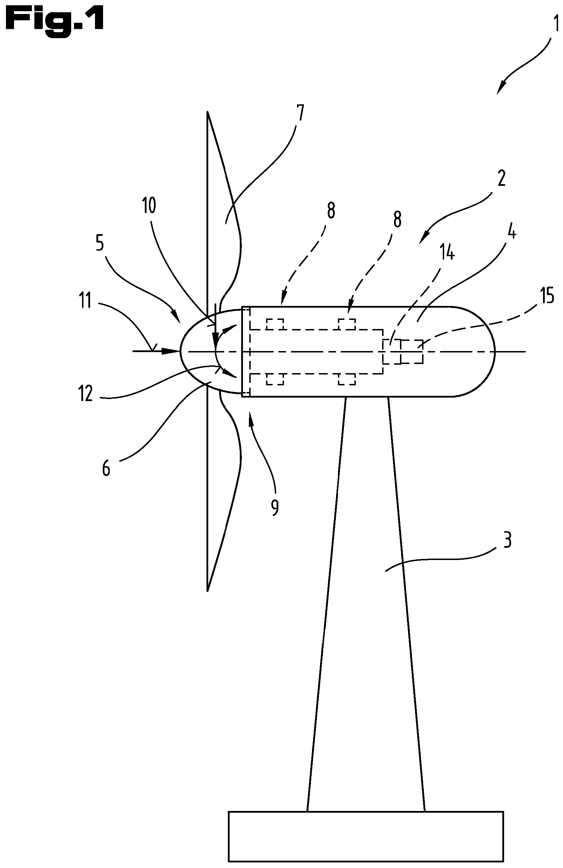

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 kann mittels einer ersten Rotorwellenlagerung 8 und einer zweiten Rotorwellenlagerung 9 drehbeweglich am Gondelgehäuse 4 aufgenommen sein. Insbesondere kann vorgesehen sein, dass die Rotornabe 6 an einer Rotorwelle 13 angeordnet ist, wobei die Rotorwelle 13 mittels der ersten Rotorwellenlagerung 8 und der zweiten Rotorwellenlagerung 9 gelagert ist.

Die erste Rotorwellenlagerung 8 und die zweite Rotorwellenlagerung 9 können zur Aufnahme einer Radialkraft 10 und einer Axialkraft 11 ausgebildet sein. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der ersten Rotorwellenlagerung 8 liegt, wird in der Rotorwelle 13 durch die Radialkraft 10 ein Kippmoment 12 hervorgerufen, welches von der ersten Rotorwellenlagerung 8 und der zweiten Rotorwellenlagerung 9 aufgenommen werden kann. Das Kippmoment 12 kann ebenfalls durch eine ungleichmäßige Belastung der Rotorblätter 7 hervorgerufen werden.

Weiters kann vorgesehen sein, dass ein Getriebe 14 ausgebildet ist, welches mit der Rotorwelle 13 gekoppelt ist. Das Getriebe 14 kann derart mit der Rotorwelle 13 gekoppelt sein, dass dieses ebenfalls von der ersten Rotorwellenlagerung 8 und der zweiten Rotorwellenlagerung 9 getragen wird.

Weiters kann vorgesehen sein, dass ein Generator 15 ausgebildet ist, welcher mit dem Getriebe 14 gekoppelt ist.

Wie aus Fig. 1 weiters ersichtlich, kann vorgesehen sein, dass die erste Rotorwellenlagerung 8 näher an der Rotornabe 6 angeordnet ist, als die zweite Rotorwellenlagerung 9.

Weiters kann vorgesehen sein, dass die zweite Rotorwellenlagerung 9 näher am Generator 15 angeordnet ist, als die erste Rotorwellenlagerung 8. Weiters kann vorgesehen sein, dass die erste Rotorwellenlagerung 8 und/oder die zweite Rotorwellenlagerung 9 zur zusätzlichen Aufnahme des Gewichtes des Generators 15 ausgebildet sind.

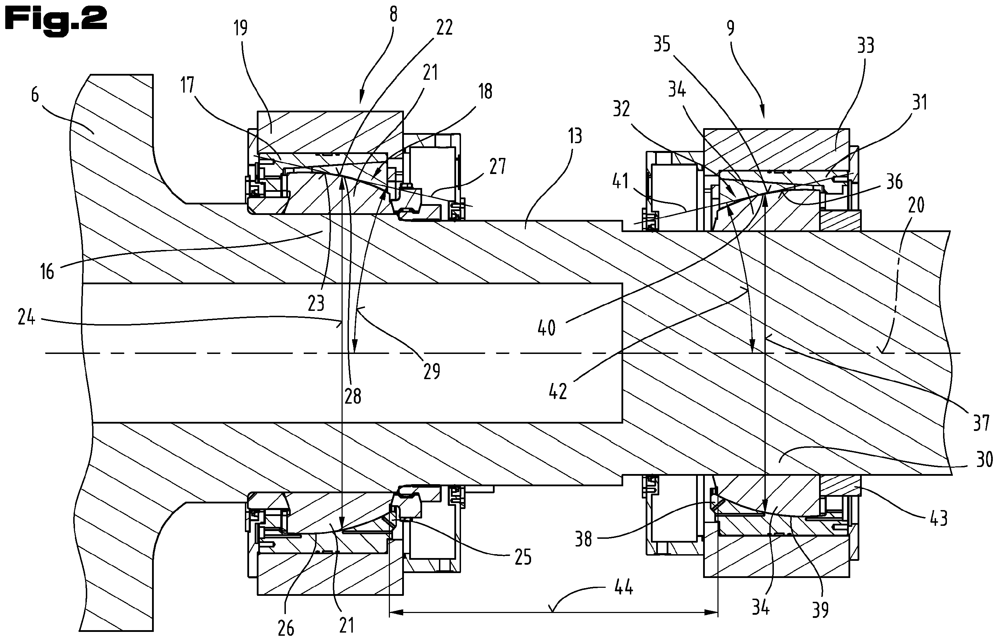

Fig. 2 zeigt ein erstes Ausführungsbeispiel der in der Gondel 2 verbauten ersten Rotorwellenlagerung 8 und zweiten Rotorwellenlagerung 9 in einer Längsschnittdarstellung.

Wie aus Fig. 2 ersichtlich, kann vorgesehen sein, dass die erste Rotorwellenlagerung 8 einen ersten Innenring 16 und einen ersten Außenring 17 aufweist. Zwischen dem ersten Innenring 16 und dem ersten Außenring 17 kann ein erstes Gleitlagerelement 18 angeordnet sein, welches zur rotatorischen Gleitlagerung des ersten Innenringes 16 relativ zum ersten Außenring 17 dient.

Im Ausführungsbeispiel, welches in Fig. 2 dargestellt ist, kann der erste Innenring 16 direkt an der Rotorwelle 13 ausgebildet sein. Weiters ist es auch denkbar, dass der erste Innenring 16 als eigenständiges Bauteil ausgebildet ist, welches an der Rotorwelle 13 aufgenommen ist.

Weiters, kann vorgesehen sein, dass der erste Außenring 17 in einem ersten Lagerbock 19 aufgenommen ist. Insbesondere kann vorgesehen sein, dass der erste Lagerbock 19 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass der erste Außenring 17 starr mit dem Gondelgehäuse 4 gekoppelt ist und der erste Innenring 16 mittels des ersten Gleitlagerelementes 18 relativ zum ersten Außenring 17 bezüglich einer Rotationsachse 20 verdrehbar ist.

Weiters kann vorgesehen sein, dass der erste Lagerbock 19 direkt als erster Außenring 17 dient.

Weiters kann vorgesehen sein, dass das erste Gleitlagerelement 18 mehrere einzelne erste Gleitlagerpads 21 umfasst, welche über den Umfang verteilt zwischen dem ersten Innenring 16 und dem ersten Außenring 17 angeordnet sind.

Die einzelnen ersten Gleitlagerpads 21 können im Betriebszustand fest mit dem ersten Innenring 16 gekoppelt sein und sich somit mit diesem relativ zum ersten Außenring 17 drehen. Um die Drehbewegung zwischen dem ersten Innenring 16 und dem ersten Außenring 17 zu ermöglichen, ist an den einzelnen ersten Gleitlagerpads 21 jeweils eine erste Gleitfläche 22 ausgebildet, welche an einer ersten Gegenfläche 23 des ersten Außenringes 17 anliegt. Die erste Gegenfläche 23 kann an einer Innenseite des ersten Außenringes 17 angeordnet sein.

Die erste Gleitfläche 22 des ersten Gleitlagerpads 21 und die erste Gegenfläche 23 des ersten Außenringes 17 sind als Gleitflächen ausgebildet, welche im Betrieb der Windkraftanlage 1 aneinander gleiten.

Insbesondere kann vorgesehen sein, dass die erste Gegenfläche 23 des ersten Außenringes 17 als harte, verschleißfeste Oberfläche ausgebildet ist, welche beispielsweise durch einen gehärteten Stahl gebildet sein kann. Die erste Gleitfläche 22 des ersten Gleitlagerpads 21 kann aus einem im Vergleich zur ersten Gegenfläche 23 weichen Gleitlagerwerkstoff gebildet sein. Natürlich ist es auch denkbar, dass die erste Gleitfläche 22 eine Gleitbeschichtung aufweist.

Wie aus Fig. 2 besonders gut ersichtlich, kann vorgesehen sein, dass die einzelnen ersten Gleitlagerpads 21 jeweils eine in Axialrichtung gesehen gewölbte erste Gleitfläche 22 aufweisen.

Weiters kann vorgesehen sein, dass die erste Gleitfläche 22 einen gemittelten ersten Gleitflächendurchmesser 24 aufweist. Der gemittelte erste Gleitflächendurchmesser 24 ist der Mittelwert der Durchmesser aus den Durchmessern der ersten Gleitfläche 22 über die gesamte Länge der Gleitfläche 22.

Die erste Gleitfläche 22 weist einen innersten Kontaktpunkt 25 auf. Der innerste Kontaktpunkt 25 der ersten Gleitfläche 22 ist jener Punkt der ersten Gleitfläche 22, an welchem die erste Gegenfläche 23 noch die erste Gleitfläche 22 kontaktiert und welcher nächstliegend zur zweiten Rotorwellenlagerung 9 angeordnet ist.

Wie aus Fig. 2 weiters ersichtlich, kann vorgesehen sein, dass die ersten Gleitfläche 22 des ersten Gleitlagerpads 21 in Form einer Kugelkalotte ausgebildet ist. Insbesondere kann vorgesehen sein, dass die erste Gleitfläche 22 im Längsschnitt einen ersten Kugelkalottenbogen 26 bildet.

Eine erste Tangente 27 an die erste Gleitfläche 22 in einer ersten Kugelkalottenbogenmitte 28 kann in einem ersten Winkel 29 zur Rotationsachse 20 angeordnet sein.

Wie aus Fig. 2 ersichtlich, kann vorgesehen sein, dass die zweite Rotorwellenlagerung 9 einen zweiten Innenring 30 und einen zweiten Außenring 31 aufweist. Zwischen dem zweiten Innenring 30 und dem zweiten Außenring 31 kann ein zweites Gleitlagerelement 32 angeordnet sein, welches zur rotatorischen Gleitlagerung des zweiten Innenringes 30 relativ zum zweiten Außenring 31 dient.

Im Ausführungsbeispiel, welches in Fig. 2 dargestellt ist, kann der zweite Innenring 30 direkt an der Rotorwelle 13 ausgebildet sein. Weiters ist es auch denkbar, dass der zweite Innenring 30 als eigenständiges Bauteil ausgebildet ist, welches an der Rotorwelle 13 aufgenommen ist.

Weiters, kann vorgesehen sein, dass der zweite Außenring 31 in einem zweiten Lagerbock 33 aufgenommen ist. Insbesondere kann vorgesehen sein, dass der zweite Lagerbock 33 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass der zweite Außenring 31 starr mit dem Gondelgehäuse 4 gekoppelt ist und der zweite Innenring 30 mittels des zweiten Gleitlagerelementes 32 relativ zum zweiten Außenring 31 bezüglich der Rotationsachse 20 verdrehbar ist.

Weiters kann vorgesehen sein, dass der zweite Lagerbock 33 direkt als zweiter Außenring 31 dient.

Weiters kann vorgesehen sein, dass das zweite Gleitlagerelement 32 mehrere einzelne zweite Gleitlagerpads 34 umfasst, welche über den Umfang verteilt zwischen dem zweiten Innenring 30 und dem zweiten Außenring 31 angeordnet sind.

Die einzelnen zweiten Gleitlagerpads 34 können im Betriebszustand fest mit dem zweiten Innenring 30 gekoppelt sein und sich somit mit diesem relativ zum zweiten Außenring 31 drehen. Um die Drehbewegung zwischen dem zweiten Innenring 30 und dem zweiten Außenring 31 zu ermöglichen, ist an den einzelnen zweiten Gleitlagerpads 34 jeweils eine zweite Gleitfläche 35 ausgebildet, welche an einer zweiten Gegenfläche 36 des zweiten Außenringes 31 anliegt. Die zweite Gegenfläche 36 kann an einer Innenseite des zweiten Außenringes 31 angeordnet sein.

Die zweite Gleitfläche 35 des zweiten Gleitlagerpads 34 und die zweite Gegenfläche 36 des zweiten Außenringes 31 sind als Gleitflächen ausgebildet, welche im Betrieb der Windkraftanlage 1 aneinander gleiten.

Insbesondere kann vorgesehen sein, dass die zweite Gegenfläche 36 des zweiten Außenringes 31 als harte, verschleißfeste Oberfläche ausgebildet ist, welche beispielsweise durch einen gehärteten Stahl gebildet sein kann. Die zweite Gleitfläche 35 des zweiten Gleitlagerpads 34 kann aus einem im Vergleich zur zweiten Gegenfläche 36 weichen Gleitlagerwerkstoff gebildet sein. Natürlich ist es auch denkbar, dass die zweite Gleitfläche 35 eine Gleitbeschichtung aufweist.

Wie aus Fig. 2 besonders gut ersichtlich, kann vorgesehen sein, dass die einzelnen zweiten Gleitlagerpads 34 jeweils eine in Axialrichtung gesehen gewölbte zweite Gleitfläche 35 aufweisen.

Weiters kann vorgesehen sein, dass die zweite Gleitfläche 35 einen gemittelten zweiten Gleitflächendurchmesser 37 aufweist. Der gemittelte zweite Gleitflächendurchmesser 37 ist der Mittelwert der Durchmesser aus den Durchmessern der zweiten Gleitfläche 35 über die gesamte Länge der zweiten Gleitfläche 35.

Die zweite Gleitfläche 35 weist einen innersten Kontaktpunkt 38 auf. Der innerste Kontaktpunkt 38 der zweiten Gleitfläche 35 ist jener Punkt der zweiten Gleitfläche 35, an welchem die zweite Gegenfläche 36 noch die zweite Gleitfläche 35 kontaktiert und welcher nächstliegend zur ersten Rotorwellenlagerung 8 angeordnet ist.

Wie aus Fig. 2 weiters ersichtlich, kann vorgesehen sein, dass die zweite Gleitfläche 35 des zweiten Gleitlagerpads 34 in Form einer Kugelkalotte ausgebildet ist. Insbesondere kann vorgesehen sein, dass die zweite Gleitfläche 35 im Längsschnitt einen zweiten Kugelkalottenbogen 39 bildet.

Eine zweite Tangente 41 an die zweite Gleitfläche 35 in einer zweiten Kugelkalottenbogenmitte 40 kann in einem zweiten Winkel 42 zur Rotationsachse 20 angeordnet sein.

Wie aus Fig. 2 weiters ersichtlich, kann vorgesehen sein, dass die erste Tangente 27 und die zweite Tangente 41 V-förmig zueinander angeordnet sind. Mit anderen Worten ausgedrückt kann vorgesehen sein, dass der erste Winkel 29 an der Seite der Rotornabe 6 gemessen wird.

Der zweite Winkel 42 kann an der von der Rotornabe abgewandten Seite gemessen werden. Weiters ist es denkbar, dass der erste Winkel 29 und der zweite Winkel 42 gleich groß sind, wobei sich durch die unterschiedliche Seite der Messung die V-förmige Anordnung ergibt.

Weiters kann vorgesehen sein, dass die zweiten Gleitlagerpads 34 mittels eines Spannmittels 43 in Axialrichtung zur ersten Rotorwellenlagerung 8 hin vorgespannt sind. Durch den beschriebenen Aufbau bzw. die Vorspannung mittels des Spannmittels 43 ergibt sich eine O-förmige Anordnung der ersten Rotorwellenlagerung 8 und der zweiten Rotorwellenlagerung 9, wodurch Radialkräfte, Axialkräfte und Kippmomente aufgenommen werden können.

Wie aus Fig. 2 weiters ersichtlich, kann vorgesehen sein, dass der innerste Kontaktpunkt 25 der ersten Gleitfläche 22 und der innerste Kontaktpunkt 38 der zweiten Gleitfläche 35 in einem Axialabstand 44 zueinander angeordnet sind.

In einem weiteren, nicht dargestellten Ausführungsbeispiel kann natürlich auch vorgesehen sein, dass der erste Innenring 16 und der zweite Innenring 30 als eigenständige Bauteile ausgebildet sind. Bei einem derartigen Ausführungsbeispiel kann vorgesehen sein, dass das Spannmittel 43 direkt auf den zweiten Innenring 30 wirkt.

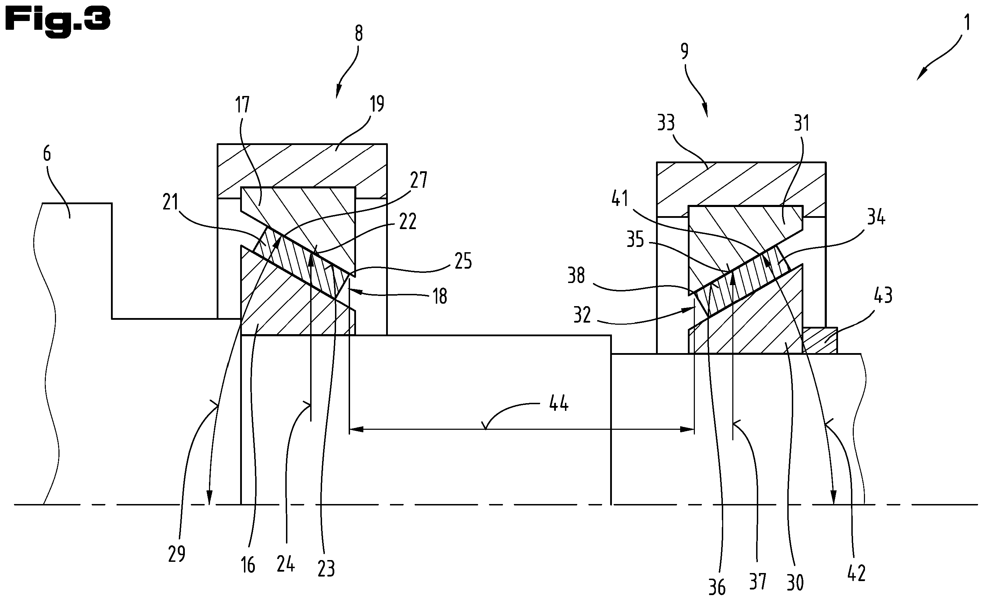

Fig. 3 zeigt ein weiteres Ausführungsbeispiel der ersten Rotorwellenlagerung 8 bzw. der zweiten Rotorwellenlagerung 9 der Windkraftanlage 1. Wie aus Fig. 3 ersichtlich, kann vorgesehen sein, dass die erste Gleitfläche 22 bzw. die zweite Gleitfläche 35 konisch ausgebildet sind. In der Längsschnittansicht sind die erste Gleitfläche 22 und die zweite Gleitfläche 35 somit als Gerade dargestellt. Wie aus Fig. 3 weiters ersichtlich, kann vorgesehen sein, dass die erste Gleitfläche 22 und die zweite Gleitfläche 35 V-förmig zueinander ausgebildet sind. Insbesondere kann vorgesehen sein, dass die erste Gleitfläche 22 und die zweite Gleitfläche 35 einander zugewandt sind.

Wie aus Fig. 3 weiters ersichtlich, kann vorgesehen sein, dass das Spannmittel 43 direkt gegen den zweiten Innenring 30 gedrückt wird bzw. auf den zweiten Innenring 30 wirkt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 28 | erste Kugelkalottenbogenmitte |
| | | 29 | erster Winkel |
| 2 | Gondel | 30 | zweiter Innenring |
| 3 | Turm | 31 | zweiter Außenring |
| 4 | Gondelgehäuse | 32 | zweites Gleitlagerelement |
| 5 | Rotor | 33 | zweiter Lagerbock |
| 6 | Rotornabe | 34 | zweites Gleitlagerpad |
| 7 | Rotorblatt | 35 | zweite Gleitfläche |
| 8 | erste Rotorwellenlagerung | 36 | zweite Gegenfläche |
| 9 | zweite Rotorwellenlagerung | 37 | gemittelter zweiter Gleitflächendurchmesser |
| 10 | Radialkraft | | |
| 11 | Axialkraft | 38 | innerster Kontaktpunkt zweite Gleitfläche |
| 12 | Kippmoment | | |
| 13 | Rotorwelle | 39 | zweiter Kugelkalottenbogen |
| 14 | Getriebe | 40 | zweite Kugelkalottenbogenmitte |
| 15 | Generator | 41 | zweite Tangente |
| 16 | erster Innenring | 42 | zweiter Winkel |
| 17 | erster Außenring | 43 | Spannmittel |
| 18 | erstes Gleitlagerelement | 44 | Axialabstand |
| 19 | erster Lagerbock | | |
| 20 | Rotationsachse | | |
| 21 | erstes Gleitlagerpad | | |
| 22 | erste Gleitfläche | | |
| 23 | erste Gegenfläche | | |
| 24 | gemittelter erster Gleitflächendurchmesser | | |
| 25 | innerster Kontaktpunkt erste Gleitfläche | | |
| 26 | erster Kugelkalottenbogen | | |
| 27 | erste Tangente | | |

## Patentansprüche

1. Gondel (2) für eine Windkraftanlage (1), die Gondel (2) umfassend:
- ein Gondelgehäuse (4);
- eine Rotorwelle (13);
- eine Rotornabe (6), welche an der Rotorwelle (13) angeordnet ist;
- eine erste Rotorwellenlagerung (8) zur Lagerung der Rotorwelle (13) am Gondelgehäuse (4),
**dadurch gekennzeichnet, dass**
- die Gondel (2) eine zweite Rotorwellenlagerung (9) zur Lagerung der Rotorwelle (13) am Gondelgehäuse (4) umfasst,
wobei die erste Rotorwellenlagerung (8) und die zweite Rotorwellenlagerung (9) in einem Axialabstand (44) zueinander angeordnet sind und wobei die erste Rotorwellenlagerung (8) näher an der Rotornabe (6) angeordnet ist, als die zweite Rotorwellenlagerung (9);
wobei die erste Rotorwellenlagerung (8) eine erste Gleitfläche (22) aufweist, welche einen gemittelten ersten Gleitflächendurchmesser (24) aufweist und dass die zweite Rotorwellenlagerung (9) eine zweite Gleitfläche (35) aufweist, welche einen gemittelten zweiten Gleitflächendurchmesser (37) aufweist, wobei die erste Gleitfläche (22) zumindest abschnittsweise von der Rotornabe (6) abgewandt ist, wobei die erste Gleitfläche (22) und die zweite Gleitfläche (35) zumindest in einem Teilabschnitt einander zugewandt sind, wobei die erste Gleitfläche (22) einen gemittelten ersten Gleitflächendurchmesser (24) aufweist, wobei der Axialabstand (44) zwischen der ersten Rotorwellenlagerung (8) und der zweiten Rotorwellenlagerung (9) vom innersten Kontaktpunkt (25) der ersten Gleitfläche (22) zum innersten Kontaktpunkt (38) der zweiten Gleitfläche (35) gemessen ist, wobei der Axialabstand (44) zwischen 20% und 1.000%, insbesondere zwischen 50% und 500%, bevorzugt zwischen 90% und 300%, im Speziellen zwischen 120% und 200% des gemittelten ersten Gleitflächendurchmessers (24) beträgt.

2. Gondel (2) nach Anspruch 1, **dadurch gekennzeichnet, dass** der Axialabstand (44) zwischen 90% und 1.000% des gemittelten ersten Gleitflächendurchmessers (24) beträgt.

3. Gondel (2) nach Anspruch 1 oder 2, **dadurch gekennzeichnet, dass** die erste Gleitfläche (22) konisch ausgebildet ist und dass die zweite Gleitfläche (35) konisch ausgebildet ist, wobei die erste Gleitfläche (22) und die zweite Gleitfläche (35) V-Förmig zueinander angeordnet sind.

4. Gondel (2) nach Anspruch 1 oder 2, **dadurch gekennzeichnet, dass** die erste Gleitfläche (22) in Form einer ersten Kugelkalotte ausgebildet ist und dass die zweite Gleitfläche (35) in Form einer zweiten Kugelkalotte ausgebildet ist, wobei die erste Gleitfläche (22) im Längsschnitt einen ersten Kugelkalottenbogen (26) bildet und wobei die zweite Gleitfläche (35) im Längsschnitt einen zweiten Kugelkalottenbogen (39) bildet, wobei eine erste Tangente (27) in einer ersten Kugelkalottenbogenmitte (28) und eine zweite Tangente (41) in einer zweiten Kugelkalottenbogenmitte (40) V-Förmig zueinander angeordnet sind.

5. Gondel (2) nach einem der vorhergehenden Ansprüche, **dadurch gekennzeichnet, dass** die erste Rotorwellenlagerung (8) einen ersten Außenring (17) aufweist und dass die zweite Rotorwellenlagerung (9) einen zweiten Außenring (31) aufweist, und dass die erste Rotorwellenlagerung (8) einen ersten Innenring (16) aufweist und dass die zweite Rotorwellenlagerung (9) einen zweiten Innenring (30) aufweist, wobei die erste Gleitfläche (22) zwischen dem ersten Außenring (17) und dem ersten Innenring (16) angeordnet ist und wobei die zweite Gleitfläche (35) zwischen dem zweiten Außenring (31) und dem zweiten Innenring (30) angeordnet ist, wobei der erste Außenring (17) und der zweite Außenring (31) in deren Position fix zueinander angeordnet sind und wobei der erste Innenring (16) in dessen Position fix zur Rotorwelle (13) angeordnet ist und wobei der zweite Innenring (30) oder ein zweites Gleitlagerelement (32) mittels eines Spannmittels (43) in Axialrichtung zum ersten Innenring (16) hin vorgespannt ist, wobei das Spannmittel (43) zwischen dem zweiten Innenring (30) und der Rotorwelle wirkt.

6. Gondel (2) nach Anspruch 5, **dadurch gekennzeichnet, dass** das Spannmittel (43) in Form einer Wellenmutter ausgebildet ist.

7. Gondel (2) nach einem der vorhergehenden Ansprüche, **dadurch gekennzeichnet, dass** ein Getriebe (14) ausgebildet ist, welches mit der Rotorwelle (13) drehmomentgekoppelt ist, wobei das Gewicht des Getriebes (14) zumindest teilweise von der zweiten Rotorwellenlagerung (9) aufgenommen ist.

8. Gondel (2) nach einem der vorhergehenden Ansprüche, **dadurch gekennzeichnet, dass** die erste Gleitfläche (22) und/oder die zweite Gleitfläche (35) an Gleitlagerpads (21) ausgebildet sind.

9. Gondel (2) nach einem der vorhergehenden Ansprüche, **dadurch gekennzeichnet, dass** der gemittelte erste Gleitflächendurchmesser (24) größer ist, als der gemittelte zweite Gleitflächendurchmesser (37), insbesondere dass der gemittelte zweite Gleitflächendurchmesser (37) zwischen 50% und 90%, bevorzugt zwischen 70% und 80% des gemittelten ersten Gleitflächendurchmessers (24) beträgt.

10. Gondel (2) nach einem der Ansprüche 5 bis 9, **dadurch gekennzeichnet, dass** der erste Außenring (17) in einem ersten Lagerbock (19) aufgenommen ist und der zweite Außenring (31) in einem zweiten Lagerbock (33) aufgenommen sind.

## Claims

1. A nacelle (2) for a wind turbine (1), the nacelle (2) comprising:
- a nacelle housing (4);
- a rotor shaft (13);
- a rotor hub (6), which is arranged on the rotor shaft (13);
- a first rotor shaft bearing (8) for bearing the rotor shaft (13) on the nacelle housing (4),
**characterized in that**
- the nacelle (2) comprises a second rotor shaft bearing (9) for bearing the rotor shaft (13) on the nacelle housing (4),
wherein the first rotor shaft bearing (8) and the second rotor shaft bearing (9) are arranged at an axial distance (44) to one another and wherein the first rotor shaft bearing (8) is arranged closer to the rotor hub (6) than the second rotor shaft bearing (9); wherein the first rotor shaft bearing (8) has a first sliding surface (22), which has an averaged first sliding surface diameter (24), and that the second rotor shaft bearing (9) has a second sliding surface (35), which has an averaged second sliding surface diameter (37), wherein the first sliding surface (22) faces away from the rotor hub (6) at least in some sections, wherein the first sliding surface (22) and the second sliding surface (35) face one another at least in a partial section, wherein the first sliding surface (22) has an averaged first sliding surface diameter (24), wherein the axial distance (44) between the first rotor shaft bearing (8) and the second rotor shaft bearing (9) is measured from the innermost contact point (25) of the first sliding surface (22) to the innermost contact point (38) of the second sliding surface (35), wherein the axial distance (44) is between 20% and 1,000%, in particular between 50% and 500%, preferably between 90% and 300%, especially between 120% and 200% of the averaged first sliding surface diameter (24).

2. The nacelle (2) according to claim 1, **characterized in that** the axial distance (44) is between 90% and 1,000% of the averaged first sliding surface diameter (24).

3. The nacelle (2) according to claim 1 or 2, **characterized in that** the first sliding surface (22) is conical and that the second sliding surface (35) is conical, wherein the first sliding surface (22) and the second sliding surface (35) are arranged in a V-shape relative to each other.

4. The nacelle (2) according to claim 1 or 2, **characterized in that** the first sliding surface (22) is configured in the form of a first spherical cap and that the second sliding surface (35) is configured in the form of a second spherical cap, wherein the first sliding surface (22) forms a first spherical cap arc (26) in longitudinal section and wherein the second sliding surface (35) forms a second spherical cap arc (39) in longitudinal section, wherein a first tangent (27) in a first spherical cap arc center (28) and a second tangent (41) in a second spherical cap arc center (40) are arranged in a V-shape relative to one another.

5. The nacelle (2) according to one of the preceding claims, **characterized in that** the first rotor shaft bearing (8) has a first outer ring (17) and that the second rotor shaft bearing (9) has a second outer ring (31), and that the first rotor shaft bearing (8) has a first inner ring (16) and that the second rotor shaft bearing (9) has a second inner ring (30), wherein the first sliding surface (22) is arranged between the first outer ring (17) and the first inner ring (16) and wherein the second sliding surface (35) is arranged between the second outer ring (31) and the second inner ring (30), wherein the first outer ring (17) and the second outer ring (31) are arranged fixed to one another in their position and wherein the first inner ring (16) is arranged fixed to the rotor shaft (13) in its position and wherein the second inner ring (30) or a second sliding bearing element (32) is pretensioned in the axial direction towards the first inner ring (16) by means of a tensioning means (43), wherein the tensioning means (43) acts between the second inner ring (30) and the rotor shaft.

6. The nacelle (2) according to claim 5, **characterized in that** the tensioning means (43) takes the form of a shaft nut.

7. The nacelle (2) according to one of the preceding claims, **characterized in that** a gearbox (14) is formed which is torque-coupled to the rotor shaft (13), wherein the weight of the gearbox (14) is at least partially absorbed by the second rotor shaft bearing (9).

8. The nacelle (2) according to one of the preceding claims, **characterized in that** the first sliding surface (22) and/or the second sliding surface (35) are formed on sliding bearing pads (21).

9. The nacelle (2) according to one of the preceding claims, **characterized in that** the averaged first sliding surface diameter (24) is larger than the averaged second sliding surface diameter (37), in particular **in that** the averaged second sliding surface diameter (37) amounts to between 50% and 90%, preferably between 70% and 80%, of the averaged first sliding surface diameter (24).

10. The nacelle (2) according to one of claims 5 to 9, **characterized in that** the first outer ring (17) is accommodated in a first bearing block (19) and the second outer ring (31) is accommodated in a second bearing block (33).

## Revendications

1. Nacelle (2) pour une éolienne (1), la nacelle (2) comprenant :
- un carter de nacelle (4) ;
- un arbre de rotor (13) ;
- un moyeu de rotor (6) qui est agencé sur l'arbre de rotor (13) ;
- un premier palier d'arbre de rotor (8) pour le montage de l'arbre de rotor (13) sur le carter de nacelle (4),
**caractérisée en ce que**
- la nacelle (2) comprend un deuxième palier d'arbre de rotor (9) pour le montage de l'arbre de rotor (13) sur le carter de nacelle (4),
le premier palier d'arbre de rotor (8) et le deuxième palier d'arbre de rotor (9) étant agencés à une distance axiale (44) l'un de l'autre, le premier palier d'arbre de rotor (8) étant agencé plus près du moyeu de rotor (6) que le deuxième palier d'arbre de rotor (9) ; le premier palier d'arbre de rotor (8) présentant une première surface de glissement (22) qui présente un premier diamètre moyen de surface de glissement (24) et le deuxième palier d'arbre de rotor (9) présentant une deuxième surface de glissement (35) qui présente un deuxième diamètre moyen de surface de glissement (37), la première surface de glissement (22) étant détournée du moyeu de rotor (6) au moins par sections, la première surface de glissement (22) et la deuxième surface de glissement (35) étant tournées l'une vers l'autre au moins dans une section partielle, la première surface de glissement (22) présentant un premier diamètre moyen de surface de glissement (24), la distance axiale (44) entre le premier palier d'arbre de rotor (8) et le deuxième palier d'arbre de rotor (9) étant mesurée entre le point de contact le plus intérieur (25) de la première surface de glissement (22) et le point de contact le plus intérieur (38) de la deuxième surface de glissement (35), la distance axiale (44) étant comprise entre 20 % et 1 000 %, en particulier entre 50 % et 500 %, de préférence entre 90 % et 300 %, et plus particulièrement entre 120 % et 200 % du premier diamètre moyen de surface de glissement (24).

2. Nacelle (2) selon la revendication 1, **caractérisée en ce que** la distance axiale (44) est comprise entre 90 % et 1 000 % du premier diamètre moyen de surface de glissement (24).

3. Nacelle (2) selon la revendication 1 ou 2, **caractérisée en ce que** la première surface de glissement (22) est de forme conique et **en ce que** la deuxième surface de glissement (35) est de forme conique, la première surface de glissement (22) et la deuxième surface de glissement (35) étant agencées en V l'une par rapport à l'autre.

4. Nacelle (2) selon la revendication 1 ou 2, **caractérisée en ce que** la première surface de glissement (22) est conçue sous la forme d'une première calotte sphérique et **en ce que** la deuxième surface de glissement (35) est conçue sous la forme d'une deuxième calotte sphérique, la première surface de glissement (22) formant, en coupe longitudinale, un premier arc de calotte sphérique (26) et la deuxième surface de glissement (35) formant, en coupe longitudinale, un deuxième arc de calotte sphérique (39), une première tangente (27) dans un premier centre d'arc de calotte sphérique (28) et une deuxième tangente (41) dans un deuxième centre d'arc de calotte sphérique (40) étant agencées en V l'une par rapport à l'autre.

5. Nacelle (2) selon l'une des revendications précédentes, **caractérisée en ce que** le premier palier d'arbre de rotor (8) présente une première bague extérieure (17) et **en ce que** le deuxième palier d'arbre de rotor (9) présente une deuxième bague extérieure (31), et **en ce que** le premier palier d'arbre de rotor (8) présente une première bague intérieure (16) et **en ce que** le deuxième palier d'arbre de rotor (9) présente une deuxième bague intérieure (30), la première surface de glissement (22) étant agencée entre la première bague extérieure (17) et la première bague intérieure (16), et la deuxième surface de glissement (35) étant agencée entre la deuxième bague extérieure (31) et la deuxième bague intérieure (30), la première bague extérieure (17) et la deuxième bague extérieure (31) étant agencées dans une position fixe l'une par rapport à l'autre, et la première bague intérieure (16) étant agencée dans une position fixe par rapport à l'arbre de rotor (13) et la deuxième bague intérieure (30) ou un deuxième élément de palier lisse (32) étant précontraint dans la direction axiale vers la première bague intérieure (16) à l'aide d'un moyen de serrage (43), le moyen de serrage (43) agissant entre la deuxième bague intérieure (30) et l'arbre de rotor.

6. Nacelle (2) selon la revendication 5, **caractérisée en ce que** le moyen de serrage (43) est réalisé sous la forme d'un écrou d'arbre.

7. Nacelle (2) selon l'une des revendications précédentes, **caractérisée en ce qu'**une transmission (14) est réalisée, qui est couplée à l'arbre de rotor (13), le poids de la transmission (14) étant au moins partiellement supporté par le deuxième palier d'arbre de rotor (9).

8. Nacelle (2) selon l'une des revendications précédentes, **caractérisée en ce que** la première surface de glissement (22) et/ou la deuxième surface de glissement (35) sont formées sur des patins de palier lisse (21).

9. Nacelle (2) selon l'une des revendications précédentes, **caractérisée en ce que** le premier diamètre moyen de surface de glissement (24) est supérieur au deuxième diamètre moyen de surface de glissement (37), en particulier **en ce que** le deuxième diamètre moyen de surface de glissement (37) est compris entre 50 % et 90 %, de préférence entre 70 % et 80 % du premier diamètre moyen de surface de glissement (24).

10. Nacelle (2) selon l'une des revendications 5 à 9, **caractérisée en ce que** la première bague extérieure (17) est logée dans un premier support de palier (19) et la deuxième bague extérieure (31) est logée dans un deuxième support de palier (33).
